# EUROPÄISCHE PATENTSCHRIFT

(11) **EP 1 837 566 B1**
(45) Veröffentlichungstag und Bekanntmachung des Hinweises auf die Patenterteilung: **02.05.2012**
(21) Anmeldenummer: 07005565.2
(22) Anmeldetag: 19.03.2007
(51) Int. Cl.: F16K 11/22, F16K 31/06, F15B 13/08, F15B 11/00

(54) **Vorrichtung und Ventilkombination zur Fliessumkehr von strömenden Medien**
Device and valve combination for flow reversal of flowing materials
Dispositif et combinaison de soupapes destinées au changement d'écoulement de milieux liquides

(30) Priorität: 24.03.2006 DE 202006004749 U
(43) Veröffentlichungstag der Anmeldung: 26.09.2007
(73) Patentinhaber: Bürkert Werke GmbH, 74653 Ingelfingen (DE)
(72) Erfinder: Hettinger, Christoph, 74653 Ingelfingen (DE); Lauth, Julia, 74653 Ingelfingen (DE); Martis, Josip, 74585 Rot am See (DE)
(74) Vertreter: Prinz & Partner

(56) Entgegenhaltungen:
- DE-A1- 19 733 577
- GB-A- 842 181

## Beschreibung

Die Erfindung betrifft eine Vorrichtung zur Fließumkehr strömender Medien und eine Ventilkombination.

Nach dem Stand der Technik sind Pumpen wie Membranpumpen in der Lage, ein Medium im Eingang anzusaugen und im Ausgang zu fördern. Eine Richtungsumkehr des geförderten Mediums ist bei Membranpumpen, die passive Einlass- und Auslassventile besitzen, nicht möglich.

Durch die Kombination einer Pumpe, insbesondere Membranpumpe, mit einer Vorrichtung oder Ventilkombination, wie in der vorliegenden Erfindung offenbart und in den beigefügten Schutzansprüchen angegeben, ist es möglich, bei unveränderter Förderrichtung der Pumpe die Förderrichtung eines Mediums umzukehren, d.h. nach Umschalten einer Mehrwegeventilkombination wird durch die bisherige Saugleitung gefördert und auf der bisherigen Druckleitung angesaugt.

In einer weiteren Anwendung kann die Erfindung genutzt werden, um die Durchflussrichtung in einer Fluidleitung umzukehren. Aus dem Stand der Technik ist bekannt, dass sich dies mit der Kombination von zwei 3-Wege-Ventilen erreichen lässt. Üblicherweise werden dabei die Ventile nebeneinander auf Anschlussplatten angeordnet. Der elektrische Anschluss erfolgt vorwiegend über Einzellitzen, die in einem Kabelbaum dann auf einen Anschlussstecker zusammengeführt sind.

Nachteilig ist hierbei, dass solche Systeme anfällig gegenüber Vibrationen sind, was häufig ein Lösen der Einzellitzen zur Folge hat. Dadurch kann es zu störenden Ausfällen der Geräte kommen.

Alternativ werden zur Fliessumkehrung von Membranpumpen Ventilsysteme eingesetzt, bei denen eine einzige Spule ein elastomerummanteltes Steuerelement betätigt, wobei gleichzeitig jeweils zwei Ventilsitze geöffnet und zwei weitere Ventilsitze geschlossen werden. Bei dieser Variante wird der Fluidraum durch axial eingespannte Dichtungen abgedichtet.

Dabei ist es nachteilig, dass bei Temperaturbelastung oder mechanischer Einwirkung Undichtheiten auftreten können.

GB 842,181 offenbart ein Mehrwegeventil mit zwei Magnetspulen, die nebeneinander angeordnet sind. Innerhalb jeder Spule ist ein beweglicher Stößel angeordnet, mit dem Ventilsitze abgedichtet werden können. Der Gesamtaufbau ist in einem Gehäuse untergebracht. Es sind zahlreiche Fluidkanäle und Fluidausgänge und -eingänge vorgesehen, sodass je nach Zusammenbau der Einzelteile unterschiedliche fluidische Steuermöglichkeiten gegeben sind.

DE 197 33 577 A1 offenbart ein elektrisches Umschaltventil mit zwei Ventilsystemen, wobei nur eine gemeinsame Magnetspule für die beiden Ventilsystem vorgesehen ist.

In der vorliegenden Erfindung soll oben genannten Nachteilen entgegengewirkt werden. Das wird erreicht durch eine Ventilkombination gemäß einem oder mehreren der Ansprüche 1 bis 7 bzw. eine Vorrichtunggemäß einem oder mehreren der Ansprüche 8 bis 10.

Es werden zwei identische Ventile fluidisch und elektrisch in einer Weise verknüpft, dass ein sehr kompakter und robuster Aufbau entsteht und durch Standardisierung eine kostengünstige Herstellung ermöglicht wird. Die Dichtungen sind rotationssymmetrisch und radial dichtend ausgeführt, wodurch eine zuverlässige Dichtheit auch bei extremen Temperaturbelastungen erreicht wird.

Die beiden in der vorliegenden Erfindung integrierten identischen Mehrwegeventile sind so ausgeführt, dass sie auf einfache Weise miteinander verbunden werden können und die Verbindungsstellen zuverlässig abgedichtet werden. Die verbundenen Ventile werden -wiederum unter Einsatz rotationssymmetrischer und radial dichtender Abdichtungen- auf eine Aufnahmeplatte gesetzt, in der das Medium zu den Anschlüssen für Einlass, Auslass und beispielsweise zu einer Förderpumpe weitergeleitet wird. Die beiden Ventile werden vorzugsweise elektrisch hintereinander geschaltet; die Spulenanschlüsse führen direkt zu einem stecker, so dass keine Anschlusslitzen erforderlich sind.

Der kompakte mechanische Aufbau und der Verzicht auf Einzellitzen führt zu einem extrem robusten und gegenüber Umgebungsschwingungen äußerst unempfindlichen System.

Weitere Merkmale und Vorteile der Erfindung ergeben sich aus der nachfolgenden Beschreibung einer bevorzugten Ausführungsform und aus den beigefügten Zeichnungen, auf die Bezug genommen wird. In den Zeichnungen zeigen:
**Fig.1** eine Anordnung von zwei identischen Mehrwegeventilen
**Fig.2** eine Schnittdarstellung von Fig. 1
**Fig.3** eine Mehrwegeventilkombination mit Adapterplatte; Darstellung der fluidischen Verknüpfung
**Fig.4** ein fluidisches Schaltbild der Mehrwegeventilkombination mit Fördereinrichtung
**Fig.5** ein fluidisches Schaltbild der Mehrwegeventilkombination ohne Fördereinrichtung
**Fig.6** eine elektrische Verbindung der beiden Spulen der Mehrwegeventilkombination

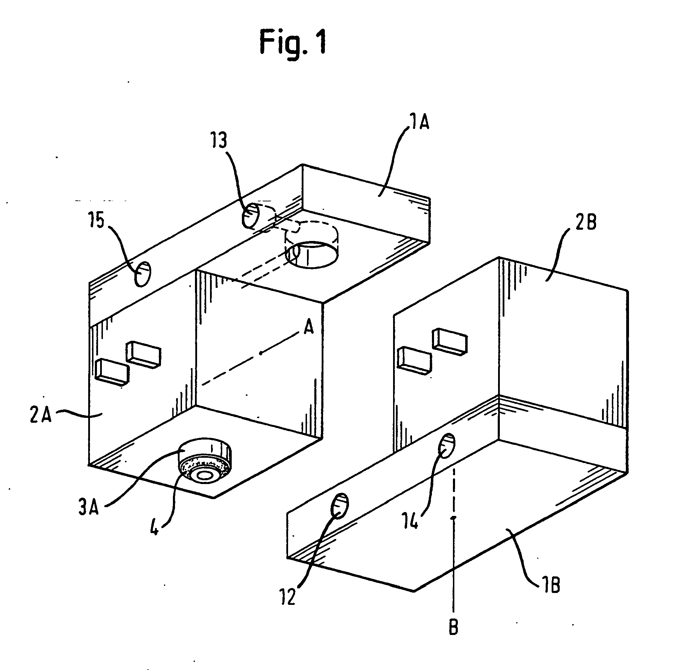

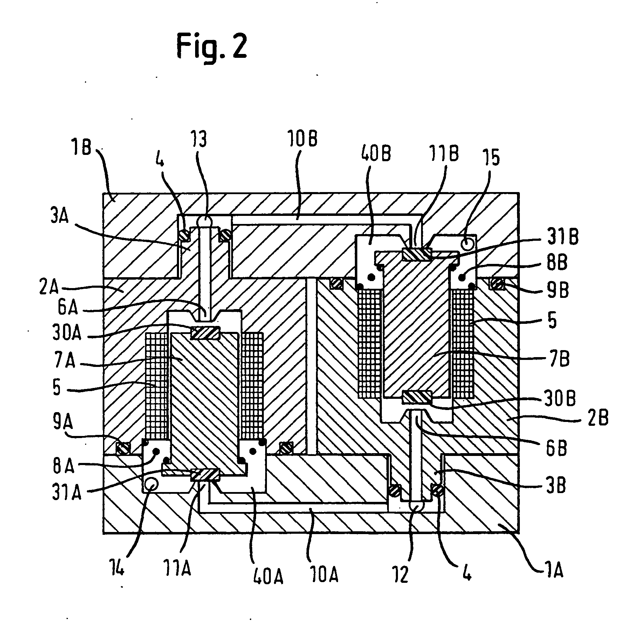

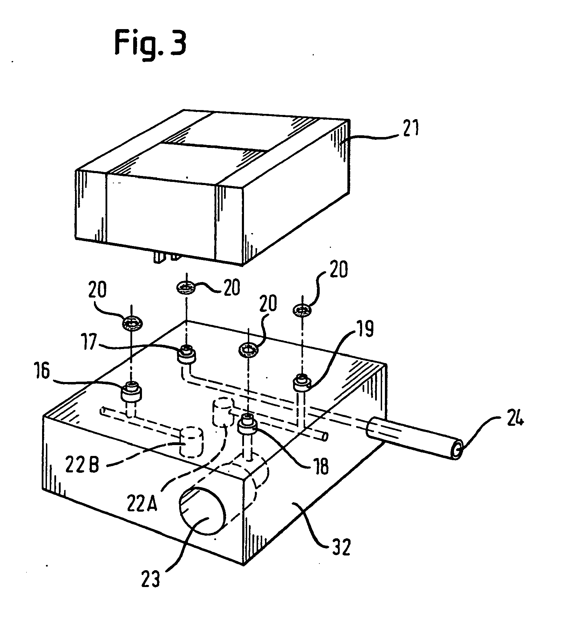

In **Fig.1** ist die Mehrwegeventilkombination aus den beiden identischen Ventilelementen dargestellt, die jeweils ein Fluidgehäuse (1A, 1B) und eine Spule (2A, 2B) enthält. Die Spule (2A, 2B) hat an ihrer Oberseite einen zylindrischen Ansatz (3A, 3B), auf den ein O-Ring (4) geschoben wird, der das jeweilige Fluidgehäuse (1A, 1 B) radial abdichtet. Die beiden Ventilelemente können ineinandergeschoben werden, wie aus **Fig.2** ersichtlich. Die Mehrwegeventilkombination (21) ist in **Fig.3** dargestellt. Diese kann einfach auf eine beliebige Adapterplatte montiert werden.

Die Spule (2A, 2B) besteht hauptsächlich aus der Wicklung (5), dem oberen Ventilsitz (6A, 6B), dem Kern (7A, 7B), der unteren Kernfeder (8A, 8B) und der Gehäusedichtung (9A, 9B).

Durch die beiden Kanäle (10A, 10B) sind jeweils die oberen Ventilsitze (6A, 6B) und die Gehäusesitze (11A, 11B) miteinander verbunden. Mit den jeweiligen Kanälen (10A, 10B) sind die Anschlussbohrungen (12 bzw. 13) verbunden, die zu den dazugehörigen Anschlussstutzen (16, 19) in der Adapterplatte (32) führen. Die beiden Anschlussstutzen (16, 19) sind in einem Ausführungsbeispiel mit den beiden Anschlüssen der Pumpe (22A, 22B) verbunden.

Mit dem Ventilraum (40A, 40B) sind ebenfalls Anschlussbohrungen (14 und 15) verbunden, die zu den Anschlussstutzen (18, 17) in der Adapterplatte (32) führen. Die Abdichtung erfolgt radial über O-Ringe (20).

In die Adapterplatte (32) sind die Fluidbohrungen (23, 24) eingearbeitet. Hier können auch zwei Pumpenanschlüsse (22A, 22B) liegen.

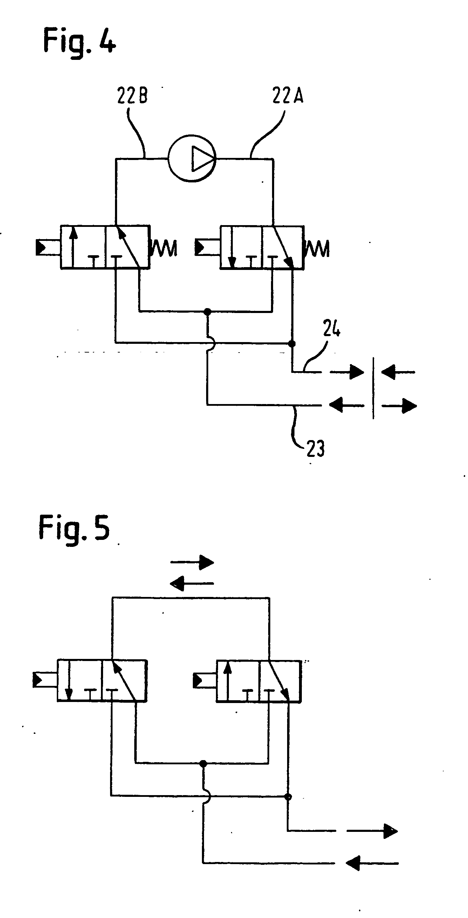

Die Verschaltung der Ventile ergibt sich aus **Fig.4****,** wenn wie in einem Ausführungsbeispiel eine Förderungseinrichtung wie z.B. eine Pumpe verwendet wird. Durch Umschalten der beiden Ventile in der Mehrwegeventilkombination (21) wechselt die Durchströmrichtung in den beiden Anschlussleitungen (23, 24).

In **Fig.5** ist ein weiteres Ausführungsbeispiel ohne Fördereinrichtung dargestellt.

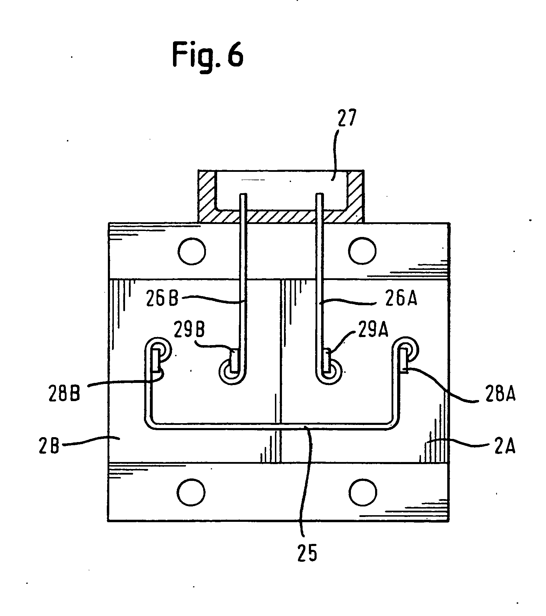

**Fig.6** zeigt die elektrische Verbindung der beiden Spulen (2A, 2B). Mit dem Klemmelement (25) werden die beiden Steckerfahnen (28A, 28B) elektrisch verbunden. Mit den Klemmelementen (26A, 26B) werden die beiden anderen Steckerfahnen (29A, 29B) jeweils zu einer Anschlussbuchse (27) geführt. Dadurch sind die beiden Spulen hintereinandergeschaltet.

Im folgenden wird die Funktionsweise der erfindungsgemäßen Vorrichtung erläutert.

In einem ersten Ausführungsbeispiel steht das Medium am Einlass (14) der Mehrwegeventilkombination (21) an und gelangt in stromlosem Zustand durch den Ventilraum (40A) über den offenen Ventilsitz (6A) zum Anschluss (13), der mit dem saugseitigen Eingang einer Pumpe verbunden ist. Der Kern (7A) aus magnetischem Material, mit dem die Dichtkörper bzw. Dichtungen (31A, 30A) fest verbunden sind, verschließt mittels der Feder (8A) den Ventilsitz (11A) und somit gelangt kein Medium in den Kanal (10A). Im Kanal (10B) befindet sich Medium, das auf die Dichtung (31B) trifft. Der Kern (7B), mit dem die Dichtungen (31B, 30B) fest verbunden sind, verschließt mittels der Feder (8B) den Ventilsitz (11B), so dass kein Medium in den Ventilraum (40B) gelangt.

Der druckseitige Ausgang der Pumpe ist mit dem Anschluss (12) verbunden. Von dort fliesst das Medium durch den geöffneten Ventilsitz (6B) und den Ventilraum (40B) in den Auslass (15). Somit fließt in stromlosem Zustand Medium vom Einlass (14) durch die Pumpe zum Auslass (15) durch die Mehrwegeventilkombination (21).

Werden die beiden Ventile in der Mehrwegeventilkombination umgeschaltet, also die Spulen (2A und 2B) mit Strom beaufschlagt, so werden die beiden Kerne (7A und 7B) aus magnetischem Material angezogen und verschließen mittels der Dichtungen (30A und 30B), die mit den Enden der Kerne (7A und 7B) fest verbunden sind, die Ventilsitze (6A und 6B). Die beiden Ventilsitze (11A und 11B) werden geöffnet. Bei unveränderter Förderrichtung der Pumpe fließt das Medium jetzt vom Auslass (15) durch die Mehrwegeventilkombination (21) zum Einlass (14).

Die Dichtungen können beispielsweise auf die Kerne anvulkanisiert sein. Eine andere Möglichkeit ist eine federnde Lagerung der Dichtungen in den Kernen.

## Patentansprüche

1. Ventilkombination (21) zur Umkehrung der Strömungsrichtung eines Mediums umfassend zwei fluidisch miteinander verschaltete Mehrwegeventilmodule (1A, 2A; 1 B, 2B), **dadurch gekennzeichnet, dass** die beiden Ventilmodule (1A, 2A; 1B, 2B) identisch sind und jedes Ventilmodul aus einem quaderförmigen Ventilblock (2A, 2B) und einem plattenförmigen Verbindungsblock (1A, 1 B) besteht, der mit dem Ventilblock (2A, 2B) L-förmig zusammengesetzt ist, wobei die beiden Ventilmodule (1A, 2A; 1B, 2B) komplementär zusammengefügt sind und komplementäre Kupplungselemente aufweisen, mit denen die zusammengefügten Ventilmodule fluidisch miteinander verbunden sind, wobei die Ventilmodule (1A, 2A; 1B, 2B) relativ zueinander um zwei aufeinander senkrechte Achsen um 180° verdreht zusammengefügt sind.

2. Ventilkombination (21) nach Anspruch 1, **dadurch gekennzeichnet, dass** im zusammengefügten Zustand die Ventilblöcke (2A, 2B) nebeneinander und zwischen den Verbindungsblöcken (1A, 1 B) angeordnet sind.

3. Ventilkombination (21) nach Anspruch 1 oder 2, **dadurch gekennzeichnet, dass** jeder Ventilblock (2A, 2B) einen Antrieb mit einem beweglichen Kern (7A, 7B) aufweist, der an jeder seiner zwei voneinander abgewandten Stirnflächen einen Dichtkörper (30A, 31A; 30B, 31 B) trägt, der mit einem gegenüberliegenden Dichtsitz (6A, 11A; 6B, 11B) zusammenwirkt.

4. Ventilkombination nach Anspruch 3, **dadurch gekennzeichnet, dass** jeweils einer der Dichtsitze (11A; 11B) in dem Verbindungsblock (1A; 1B) des anderen Ventilmoduls gebildet ist.

5. Ventilkombination nach Anspruch 3 oder 4, **dadurch gekennzeichnet, dass** jeweils einer der Dichtsitze (6A; 6B) in dem Ventilblock (2A, 2B) gebildet ist und in Gegenüberlage zu dem Dichtsitz ein zylindrischer Ansatz (3A, 3B) am Ventilblock gebildet ist, der von einem am Ventilsitz mündenden Kanal durchsetzt und abgedichtet in eine passende Aussparung des gegenüberliegenden Verbindungsblocks (1A; 1 B) eingesetzt ist.

6. Ventilkombination nach einem der Ansprüche 1 bis 5, **dadurch gekennzeichnet, dass** die elektrischen Antriebe der Ventilmodule in Reihe oder parallel geschaltet sind.

7. Ventilkombination (21) nach einem der Ansprüche 1 bis 6, **dadurch gekennzeichnet, dass** jeder Verbindungsblock (1A, 1B) eine erste Anschlussbohrung (12; 13) aufweist, die mit einem Kanal (10A, 10B), über den die fluidische Verbindung zwischen den Ventilmodulen erfolgt, verbunden ist, sowie eine zweite Anschlussbohrung (14; 15) aufweist, die jeweils mit einem Ventilraum (40A, 40B) der Ventilblöcke (2A, 2B) verbunden ist, wobei die ersten und zweiten Anschlussbohrungen (12, 13, 14, 15) auf einer gemeinsamen Seite der Ventilkombination (21) angeordnet sind.

8. Vorrichtung zur Umkehrung der Strömungsrichtung eines Mediums umfassend eine Ventilkombination (21) gemäß einem der Ansprüche 1 bis 7 sowie eine Adapterplatte (32), auf die die Ventilkombination (21) aufgesetzt ist.

9. Vorrichtung gemäß Anspruch 8, wenn auf Anspruch 7 rückbezogen, wobei die Adapterplatte Anschlussstutzen (16, 17, 18, 19) aufweist, die zu den ersten und zweiten Anschlussbohrungen (12, 13, 14, 15) führen und mit diesen fluidisch dicht verbunden sind.

10. Vorrichtung gemäß Anspruch 8 oder 9, **dadurch gekennzeichnet, dass** die beiden Ventile elektrisch über zwei Klemmelemente (26A, 26B) direkt mit den Anschlusskontakten einer an der Adapterplatte angebrachten Anschlussbuchse (27) verbunden sind.

## Claims

1. A valve combination (21) for reversing the direction of flow of a medium, comprising two fluidically interconnected multi-way valve modules (1A, 2A; 1B, 2B), **characterized in that** the two valve modules (1A, 2A; 1B, 2B) are identical and each valve module is made up of a cuboid valve block (2A, 2B) and a plate-shaped connecting block (1A, 1B) that is assembled with the valve block (2A, 2B) in an L shape, the two valve modules (1A, 2A; 1B, 2B) being joined together so as to be complementary and including complementary coupling members which fluidically interconnect the joined valve modules, the valve modules (1A, 2A; 1B, 2B) being joined together in relation to each other rotated through 180 degrees about two mutually perpendicular axes.

2. The valve combination (21) according to claim 1, **characterized in that** in the assembled condition the valve blocks (2A, 2B) are arranged side by side and between the connecting blocks (1A, 1B).

3. The valve combination (21) according to claim 1 or 2, **characterized in that** each valve block (2A, 2B) includes a drive having a movable core (7A, 7B) which carries a sealing body (30A, 31A; 30B, 31 B) on each of its two end faces facing away from each other, the sealing body cooperating with an oppositely located sealing seat (6A, 11A; 6B, 11 B).

4. The valve combination according to claim 3, **characterized in that** one each of the sealing seats (11A; 11 B) is formed in the connecting block (1A; 1 B) of the respective other valve module.

5. The valve combination according to claim 3 or 4, **characterized in that** one each of the sealing seats (6A; 6B) is formed in the valve block (2A, 2B), and a cylindrical extension (3A, 3B) is formed at the valve block in opposition to the sealing seat, the extension being traversed by a duct which opens at the valve seat and being inserted in a sealed fashion in a matching recess of the oppositely located connecting block (1A; 1B).

6. The valve combination according to any of claims 1 to 5, **characterized in that** the electric drives of the valve modules are connected in series or in parallel.

7. The valve combination (21) according to any of claims 1 to 6, **characterized in that** each connecting block (1A, 1 B) includes a first connecting port (12; 13) which is connected with a duct (10A, 10B) via which the fluidic connection between the valve modules is effected, as well as a second connecting port (14; 15) which is respectively connected with a valve chamber (40A, 40B) of the valve blocks (2A, 2B), the first and second connecting ports (12, 13, 14, 15) being arranged on a common side of the valve combination (21).

8. A device for reversing the direction of flow of a medium, comprising a valve combination (21) according to any of claims 1 to 7 as well as an adapter plate (32) on which the valve combination (21) is mounted.

9. The device according to claim 8 if dependent on claim 7, the adapter plate having connecting pieces (16, 17, 18, 19) which lead to the first and second connecting ports (12, 13, 14, 15) and are fluidically tightly connected therewith.

10. The device according to claim 8 or 9, **characterized in that** the two valves are electrically connected by means of two clamping members (26A, 26B) directly to the connecting contacts of a female connector (27) fitted to the adapter plate.

## Revendications

1. Combinaison de valves (21) pour l'inversion du sens d'écoulement d'un fluide, comportant deux modules de valve à plusieurs voies (1A, 2A; 1B, 2B) couplés l'un à l'autre de manière fluidique, **caractérisée en ce que** les deux modules de valve (1A, 2A ; 1 B, 2B) sont identiques et **en ce que** chaque module de valve est composé d'un bloc de valve (2A, 2B) parallélépipédique et d'un bloc de connexion (1A, 1B) en forme de plaque lequel est assemblé en forme de L avec le bloc de valve (2A, 2B), les deux modules de valve (1A, 2A ; 1 B, 2B) étant assemblés de façon complémentaire et présentant des éléments de couplage complémentaires au moyen desquels les modules de valves assemblés sont reliés l'un à l'autre de manière fluidique, les modules de valve (1A, 2A ; 1 B, 2B) étant assemblés l'un par rapport à l'autre tournés de 180° autour de deux axes perpendiculaires l'un à l'autre.

2. Combinaison de valves (21) selon la revendication 1, **caractérisée en ce qu'**à l'état assemblé, les blocs de valve (2A, 2B) sont agencés l'un à côté de l'autre et entre les blocs de connexion (1A, 1 B).

3. Combinaison de valves (21) selon la revendication 1 ou 2, **caractérisée en ce que** chaque bloc de valve (2A, 2B) présente un entraînement avec un noyau mobile (7A, 7B) portant sur chacune de ses deux faces frontales détournées l'une de l'autre un corps d'étanchéité (30A, 31A; 30B, 31 B) qui coopère avec un siège d'étanchéité (6A, 11A ; 6B, 11B) opposé.

4. Combinaison de valves selon la revendication 3, **caractérisée en ce qu'**un siège respectif des sièges d'étanchéité (11A ; 11 B) est agencé dans le bloc de connexion (1A ; 1 B) de l'autre module de valve.

5. Combinaison de valves selon la revendication 3 ou 4, **caractérisée en ce qu'**un siège respectif des sièges d'étanchéité (6A ; 6B) est réalisé dans le bloc de valve (2A, 2B) et **en ce qu'**une saillie cylindrique (3A, 3B) est réalisée sur le bloc de valve en face du siège d'étanchéité, la saillie étant traversée par un canal débouchant sur le siège de valve et étant insérée de manière étanche dans un évidement correspondant du bloc de connexion (1A ; 1 B) opposé.

6. Combinaison de valves selon l'une des revendications 1 à 5, **caractérisée en ce que** les entraînements électriques des modules de valve sont montés en série ou en parallèle.

7. Combinaison de valves (21) selon l'une des revendications 1 à 6, **caractérisée en ce que** chaque bloc de connexion (1A, 1 B) présente un premier perçage de raccordement (12 ; 13) qui est relié à un canal (10A, 10B) au moyen duquel la liaison fluidique entre les modules de valve est établie, et un deuxième perçage de raccordement (14 ; 15) respectivement relié à une chambre de valve (40A, 40B) des blocs de valve (2A, 2B), les premiers et les deuxièmes perçages de raccordement (12, 13, 14, 15) étant agencés d'un côté commun de la combinaison de valves (21).

8. Dispositif d'inversion du sens d'écoulement d'un fluide, comportant une combinaison de valves (21) selon l'une des revendications 1 à 7 ainsi qu'une plaque adaptatrice (32) sur laquelle la combinaison de valves (21) est placée.

9. Dispositif selon la revendication 8, lorsqu'il se réfère à la revendication 7, la plaque adaptatrice présentant des embouts de raccordement (16, 17, 18, 19) qui mènent aux premiers et deuxièmes perçages de raccordement (12, 13, 14, 15) et qui sont reliés à ceux-ci de manière fluidiquement étanche.

10. Dispositif selon la revendication 8 ou 9, **caractérisé en ce que** les deux valves sont directement reliées de façon électrique aux contacts de raccordement d'une douille de raccordement (27) montée sur la plaque adaptatrice au moyen de deux éléments de serrage (26A, 26B).
